# EUROPEAN PATENT APPLICATION

(11) **EP 3 216 752 A1**
(43) Date of publication of application: **13.09.2017**
(21) Application number: 15856288.4
(22) Date of filing: 03.11.2015
(51) Int. Cl.: B68G 1/00, D06M 11/74

(54) **PHOTOHEATING FILLER HAVING BALL SHAPE**

(30) Priority: 05.11.2014 KR 20140152659
(71) Applicant: Go, Kyung Chan, Seongnam-si, Gyeonggi-do 13555 (KR)
(72) Inventor: Go, Kyung Chan, Seongnam-si, Gyeonggi-do 13555 (KR)
(74) Representative: Lantos, Mihaly
(86) International application number: PCT/KR2015/011693
(87) International publication number: WO 2016/072694

(57) **Abstract**

A ball-shaped photothermal filler is provided, which is formed by making one or more short fibers selected from a polyamide short fiber, a polyester short fiber, and a polypropylene short fiber in the shape of a ball, wherein the filler contains a photothermal material.

## Description

### BACKGROUND OF THE INVENTION

### Field of the Invention

The present invention relates to a ball-shaped photothermal filler, and more particularly, to a photothermal filler with high heat insulation efficiency which efficiently converts light energy such as solar light into heat energy to generate heat.

### Description of the Related Art

As outdoor clothing becomes popular, outdoor goods are already deeply involved in our life such that anyone wears at least one goose-down or duck-down jumper for maintenance of body temperature against cold wind. Also, through information given by various press media regarding properly knowing of outdoor goods, consumers began to demand outdoor goods having functionality suitable for daily life rather than expensive goods having high functionality and heat insulating property against extreme environments. Winter outdoor goods, which are recently being developed to keep pace with these trends of consumption, have not only slimness and lightness but also high functionalities such as heat insulation, light weight, wind resistance, and moisture permeability, and are thus becoming more popular day by day.

Therefore, outdoor goods with improved heat insulating ability are being manufactured by a passive method of preventing heat released from the human body from being lost to the outside and an active method of utilizing heat applied from the outside. As the former method, several methods are being proposed, such as, a method of insulating heat generated from the human body by means of an air layer of fabric, a method of using infrared light reflecting materials which prevent radiant heat emitted from the human body from being emitted to the outside of clothing, and a method of using materials which absorb energy radiated from human body; and, as the latter method, a method is being proposed, which applies, to clothes, electrical heating materials, heating & warming materials by chemical reaction, and warming materials by storing solar light.

However, most of goods being currently released for cold protection use the heat insulation method by means of the air layer as the passive method, which may lead to an increase in thickness of fabric forming clothes to cause a reduction of activity. Also, feathers used as a filler for an inner layer may have poor heat insulating ability and a bad appearance due to a fiber ball phenomenon and a fiber exudation phenomenon occurring during washing.

Furthermore, goose down or duck down is generally used as the feathers, and a mixture of down and plumage is mostly used. The down is generally obtained from breast, lower abdomen, bottom of neck, or portions beneath wings of an aquatic bird and serves to improve heat insulating property and tactility of goods for cold protection; and the plumage improves a volume and a fill power to give excellent restoring force. However, it is difficult to manufacture goods in bulk in that even a little carelessness may spread virus to cause avian influenza frequently, and feathers are restrictively provided only from birds. This also makes it impossible to supply goods at a low price.

Accordingly, general-purpose outdoor goods having competitive price as well as better functionality than the aforementioned materials and development of domestic materials for such goods are required to satisfy desire of consumers in various strata.

Korean Registered Patent No. 10-1183949 disclosed a heat insulating bubble jacket in which synthetic fibers and mammals' furs are used together and laminated. The bubble jacket is made of a multi-layered heat insulating material which is manufactured by laminating a synthetic fiber layer and a layer formed of a mixture of mammals' furs and synthetic fibers, and thus has a proper thickness and a stable shape without the fiber ball phenomenon or fiber exudation phenomenon. However, additional facilities for supplying mammals' furs should be supplemented to typical manufacturing equipment for a bubble jacket to make processes complicated, and, moreover, the mixing of feathers such as mammals' furs with synthetic fibers causes not only price competitiveness to be worse than general synthetic heat insulating materials but also feathers' own advantages to be disappeared.

Furthermore, general synthetic filler is manufactured in a certain form by laminating short fibers, and therefore, when the synthetic filler is used in clothing such as a bubble jacket, the fiber ball phenomenon may be occurred, and restoring properties may be degraded in long-term use.

### SUMMARY OF THE INVENTION

An object of the present invention is to provide a ball-shaped photothermal filler which can supplement and substitute shortcomings of feathers used in clothing and thus be environment-friendly.

Another object of the present invention is to provide a ball-shaped photothermal filler which has high heat efficiency by generating heat through absorption of light such as solar light without any additional facility and has good heat insulating property and heat generating function.

A further object of the present invention is to provide a ball-shaped photothermal filler having excellent restoring force even after long-term use.

According to an aspect of the present invention, there is provided a ball-shaped photothermal filler obtained by making one or more short fibers selected from a polyamide short fiber, a polyester short fiber, and a polypropylene short fiber in the shape of a ball, wherein the filler contains a photothermal material.

According to an aspect of the present invention, there is also provided a ball-shaped photothermal filler, wherein the one or more short fibers selected from the polyamide short fiber, polyester short fiber, and polypropylene short fiber has/have a fineness of 1.5 to 7 denier.

According to an aspect of the present invention, there is also provided a ball-shaped photothermal filler, wherein the one or more short fibers selected from the polyamide short fiber, polyester short fiber, and polypropylene short fiber has/have a fiber length of 0.5 to 100 mm.

According to an aspect of the present invention, there is also provided a ball-shaped photothermal filler, wherein the one or more short fibers selected from the polyamide short fiber, polyester short fiber, and polypropylene short fiber is/are a hollow fiber.

According to an aspect of the present invention, there is also provided a ball-shaped photothermal filler, wherein the one or more short fibers selected from the polyamide short fiber, polyester short fiber, and polypropylene short fiber has/have a hollowness of 10% or more.

According to an aspect of the present invention, there is also provided a ball-shaped photothermal filler, wherein the one or more short fibers selected from the polyamide short fiber, polyester short fiber, and polypropylene short fiber is/are latent and a potential crimped fiber.

According to an aspect of the present invention, there is also provided a ball-shaped photothermal filler further including an elastic fiber.

According to an aspect of the present invention, there is also provided a ball-shaped photothermal filler, wherein the photothermal material is any one or a mixture of at least two materials selected from a carbonaceous compound, ATO, ITO, and an oxide of metal in Group IV.

According to an aspect of the present invention, there is also provided a ball-shaped photothermal filler, wherein the photothermal material is contained in the polyester short fiber, polypropylene short fiber, or both thereof.

According to an aspect of the present invention, there is also provided a ball-shaped photothermal filler, wherein the photothermal material is contained in the filler by a spraying method.

According to an aspect of the present invention, there is also provided a ball-shaped photothermal filler, wherein the photothermal material is contained in the filler by a dipping method.

According to an aspect of the present invention, there is also provided a ball-shaped photothermal filler, wherein the photothermal filler has a diameter of 0.5 to 2.0 cm.

According to an aspect of the present invention, there is also provided a ball-shaped photothermal filler, wherein the photothermal filler has a fill power of 200 or more.

According to an aspect of the present invention, there is also provided a ball-shaped photothermal filler, wherein the temperature of the photothermal filler rises as much as 10°C or more after infrared irradiation.

According to an aspect of the present invention, there is also provided a ball-shaped photothermal filler, wherein the photothermal filler is mixed with goose down or duck down.

### BRIEF DESCRIPTION OF THE DRAWINGS

The accompanying drawings, which are included to provide a further understanding of the invention and are incorporated in and constitute a part of this application, illustrate embodiments of the invention and together with the description serve to explain the principle of the invention. In the drawings:
FIG. 1 is a picture showing an embodiment of a ball-shaped photothermal filler according to the present invention; and
FIG. 2 illustrates a state diagram in use of a ball-shaped photothermal filler according to the present invention.

### DETAILED DESCRIPTION OF THE INVENTION

Reference will now be made in detail to the preferred embodiments of the present invention, examples of which are illustrated in the accompanying drawings. Wherever possible, like reference numbers or symbols will be used throughout the drawings to refer to like elements or parts. In describing the present invention, specific descriptions on related known functions or constitutions will be omitted not to obscure the essentials of the present invention.

Terms on degrees such as 'approximately' or 'substantially' used herein, are used as a meaning close from or to the numerical value when allowable manufactural/material errors unique for the mentioned meaning are suggested, and are used to prevent unconscionable infringers from inappropriately using disclosure in which exact or absolute numerical values are mentioned to help understanding of the present invention.

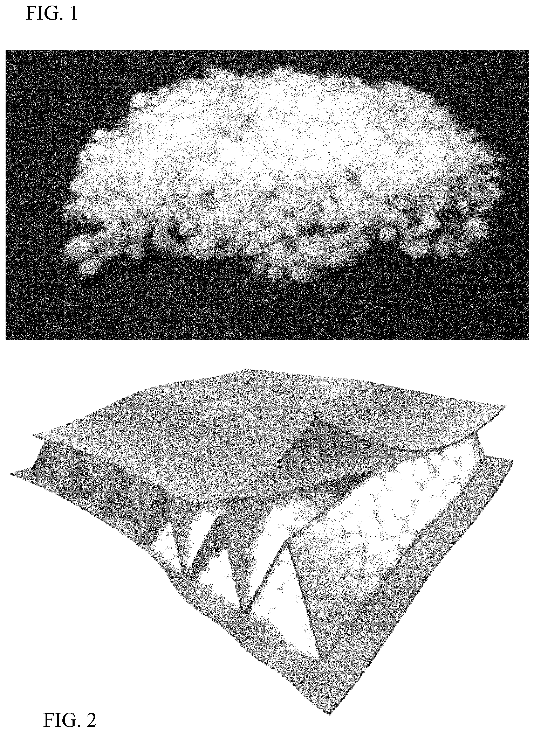

FIG. 1 is a picture showing an embodiment of a ball-shaped photothermal filler according to the present invention, and FIG. 2 illustrates a state diagram in use of a ball-shaped photothermal filler according to the present invention.

As shown in FIG. 1, the present invention is a ball-shaped photothermal filler which is formed by making either a polyester short fiber, a polypropylene short fiber, or both thereof in the shape of a ball.

The filler contains a photothermal material, and thus improves heat insulating property by generating heat when the filler is irradiated with light such as solar light, visible light, or infrared light.

It would be preferable that the polyester short fiber, the polypropylene short fiber, or both thereof have a fineness of 1.5 to 7 denier.

In general, the filler has different air content and fill power depending on the fineness of a short fiber used in the filler. In the case where the fineness of the short fiber included in the filler is small, heat insulating property may be improved due to high air content but a fill power may be reduced due to low elasticity of the fine fiber. On the other hand, in the case where the fineness of the short fiber included in the filler is large, a fill power may be increased due to excellent elastic force but the air content may decrease.

Therefore, the ball-shaped photothermal filler of the present invention uses a short fiber having a fineness of 1.5 to 7 denier, and may thus satisfy air content and a fill power simultaneously.

When the fiber length of the polyester short fiber, the polypropylene short fiber, or both thereof is too short or too long, it may be difficult to form a ball-shaped filler, or shape stability may be reduced, and thus it is preferable that the fiber length of the short fiber is 0.5 to 100 mm.

A hollow fiber may be used for the polyester short fiber, the polypropylene short fiber, or both thereof in order to increase the air content of the ball-shaped photothermal filler of the present invention.

In the case where a hollow fiber is used for the polyester short fiber, the polypropylene short fiber, or both thereof, hollow fibers may be used for all of the short fibers included in the filler, or used for some of the short fibers.

Furthermore, in the case where a hollow fiber is used for the polyester short fiber, the polypropylene short fiber, or both thereof, it is preferable that the hollowness of the hollow fiber is 10% or more because improvement of heat insulating property caused by an increase in air content is not significant if the hollowness of the hollow fiber is less than 10%.

A conjugated fiber may be used for the polyester short fiber, the polypropylene short fiber, or both thereof using two polymers having different thermal histories in order to increase a fill power of the ball-shaped photothermal filler of the present invention.

In the case where a conjugated fiber is used for the polyester short fiber, the polypropylene short fiber, or both thereof, a conjugated fiber may be used for all of the short fibers included in the filler, or used for some of the short fibers.

Furthermore, the photothermal filler may further include an elastic fiber to further increase the fill power of the ball-shaped photothermal filler of the present invention.

In the case where the photothermal filler includes an elastic fiber, content of the elastic fiber increases but the air content of the photothermal filler may decrease. Thus, it is preferable that the photothermal filler contains 5 to 20 weight% of the elastic fiber.

Furthermore, the polyester short fiber, the polypropylene short fiber, or both thereof may be treated such that the short fiber contains silicon oil in order to give soft feel to the ball-shaped photothermal filler of the present invention.

The photothermal material contained in the ball-shaped photothermal filler of the present invention has a heat generating function by amplifying solar light, and may include, for example, a carbonaceous compound such as carbon nanotube or carbon black; antimony tin oxide (ATO); indium tin oxide (ITO); an oxide of metal in Group IV such as titanium, zirconium and hafnium. In the present invention, it is preferable that any one or a mixture of at least two materials selected from the above-described photothermal materials is used.

When the carbonaceous compound such as carbon nanotube or carbon black is applied as a photothermal material, color expression may be limited because the photothermal filler is black in color. Moreover, when the photothermal material including the carbonaceous compound comes out of goods due to repetitive friction with the outside, the appearance may be spoiled due to black powder or the like. Therefore, antimony tin oxide (ATO), indium tin oxide (ITO), and an oxide of metal in Group IV such as titanium, zirconium and hafnium, and the like may be preferably used as the photothermal material of the present invention

As a method of incorporating the photothermal material into the filler, the photothermal material is incorporated into a spinning solution of the polyester short fiber, the polypropylene short fiber, or both thereof which forms the filler, and then formed into a short fiber; or, the photothermal material is incorporated such that a polymer chip which contains the photothermal material is prepared and added into a spinning solution of the polyester short fiber, the polypropylene short fiber, or both thereof, and then formed into a short fiber.

Alternatively, the photothermal material may be incorporated in the photothermal filler by a spraying method in which the photothermal material and a binder are mixed and then sprayed onto the polyester short fiber, the polypropylene short fiber, or both thereof, or fiber ball-shaped filler thereof.

Alternatively, the photothermal material may be incorporated in photothermal filler by a dipping method in which a dipping solution containing the photothermal material is prepared and then the polyester short fiber, the polypropylene short fiber, or both thereof, or fiber ball-shaped filler thereof is dipped into the dipping solution.

In the case of the ball-shaped photothermal filler which contains such a photothermal material as aforementioned, it is preferable that the temperature of the photothermal filler rises as much as 10°C or more after infrared irradiation.

The ball-shaped photothermal filler thus formed according to the present invention may have a diameter that may be adjusted according to goods to be used, and the photothermal filler is preferably manufactured to have a diameter of 0.5 to 2.0 cm to be suitable for clothing.

Furthermore, it is preferable that the photothermal filler of the present invention is formed in the shape of a ball to have a high air content and excellent elastic restoring property, and also has a fill power of 200 or more.

Furthermore, an antistatic agent may be added to the ball-shaped photothermal filler to prevent static electricity and thus antistatic properties may be improved.

When the ball-shaped photothermal filler thus formed according to the present invention is applied to clothing such as a bubble jacket, it may be used by forming sections in which the ball-shaped photothermal filler may be filled, as illustrated in FIG. 2.

Furthermore, the ball-shaped photothermal filler of the present invention may be used alone, or used as being mixed with natural materials such as goose down or duck down to supplement shortcomings of a synthetic fiber.

When the ball-shaped photothermal filler is mixed with the goose down or duck down, it is preferable that 10-90 wt% of the ball-shaped photothermal filler and 10-90 wt% of the goose down or duck down are mixed.

Hereinafter, Examples of a method of manufacturing a ball-shaped photothermal filler according to the present invention will be described, but the present invention is not limited thereto.

### Example 1

A binder and ATO which was a photothermal material were mixed and sprayed to a polyester short fiber having a fineness of 3 denier and a fiber length of approximately 30 to 50 mm to incorporate the photothermal material into the polyester short fiber.

A ball-shaped photothermal filler of the present invention shown in FIG. 1 was manufactured by making the short fiber containing the photothermal material in the shape of a ball having a diameter of approximately 0.7 to 1.0 cm.

### Example 2

A binder and zirconium oxide which was a photothermal material were mixed and sprayed to a polypropylene short fiber having a fineness of 2 denier and a fiber length of approximately 40 to 60 mm to incorporate the photothermal material into the polypropylene short fiber.

A ball-shaped photothermal filler of the present invention was manufactured by making the short fiber containing the photothermal material in the shape of a ball having a diameter of approximately 0.7 to 1.0 cm.

### Example 3

A binder and ATO which was a photothermal material were mixed and sprayed to a polyester hollow short fiber having a fineness of 2.5 denier, a fiber length of approximately 30 to 50 mm and a hollowness of approximately 20% to incorporate the photothermal material into the polyester hollow short fiber.

A ball-shaped photothermal filler of the present invention was manufactured by making the short fiber containing the photothermal material in the shape of a ball having a diameter of approximately 0.7 to 1.0 cm.

### ⊚ Evaluation test for photothermal property

The ball-shaped photothermal filler manufactured in the above Examples according to the present invention was stacked to be 5 cm in height, and then evaluation test for photothermal property was conducted.

### 1. Test procedure

A. Laboratory temperature and humidity: (24±2)°C and (40±5)% R.H
B. Samples were stabilized to have the same temperature in the laboratory.
C. A 200W light bulb which was 45 cm apart from the sample was lit for 30 minutes to induce photothermal effect of the sample, and a thermometer was attached to a central portion of the sample to measure the temperature.

### 2. Evaluation result of photothermal property

The photothermal properties of above Examples 1 to 3 were evaluated by the aforementioned test procedure. The test results are shown in Table 1.

**[Table 1]**

| Time (min) | Example 1 (°C) | Example 2 (°C) | Example 3 (°C) |
|---|---|---|---|
| 0 | 28.7 | 28.9 | 28.6 |
| 5 | 54.7 | 55.8 | 56.2 |
| 10 | 59.5 | 59.4 | 59.8 |
| 15 | 59.8 | 59.8 | 59.7 |
| 20 | 59.8 | 59.8 | 59.9 |
| 25 | 59.5 | 59.8 | 60.3 |
| 30 | 60.1 | 59.7 | 60.1 |

As shown in Table 1, in Examples 1 to 3 of the present invention, it can be seen that the temperature of fabric increased rapidly immediately after lighting the bulb and the temperature increased as much as 20°C or more after 5 minutes. Since there is no difference in the margin of temperature increase after about 10 minutes, it may be determined that equilibrium state is maintained.

### ⊚ Evaluation test for fill power

### 1. Test procedure

- 1 ounce (28.4g) of a sample was put in a cylinder having a diameter of 241mm, compressed under a load of 3 ounces for 3 days, compression was removed, and then a restored volume was measured.
   Example of fill power measurement) A fill power is 300 when the restored volume is 300 in³/oz.
- An average value was calculated from results of 5 evaluation tests per a sample.

### 2. Evaluation result of fill power

Fill powers of above Examples 1 to 3 were evaluated by the aforementioned test procedure. The test results are shown in Table 2.

**[Table 2]**

| Item | Example 1 (°C) | Example 2 (°C) | Example 3 (°C) |
|---|---|---|---|
| Fill power | 652 | 638 | 611 |

As shown in Table 2, all of the fill powers in Examples 1 to 3 were evaluated to be 600 or more, wherein the fill power of the filler in Example 1 using the polyester short fiber was measured to be highest, and the fill power of the filler in Example 3 using the polyester hollow short fiber was measured to be lowest.

The ball-shaped photothermal filler according to the present invention has a high air content, and has excellent heat efficiency and heat insulating property by absorbing and converting light such as solar light into heat energy using good thermal properties of a heat generating material.

Furthermore, the ball-shaped photothermal filler according to the present invention supplements shortcomings of feathers which have been used as a filler, and thus has good washing durability and prevents the fiber ball phenomenon and the fiber exudation phenomenon by virtue of a ball shape.

In addition, the ball-shaped photothermal filler according to the present invention has excellent restoring force even after long-term use.

It will be apparent to those skilled in the art that various modifications and variations can be made in the present invention. Thus, it is intended that the present invention covers the modifications and variations of this invention provided they come within the scope of the appended claims and their equivalents.

## Claims

1. A ball-shaped photothermal filler obtained by making one or more short fibers selected from a polyamide short fiber, a polyester short fiber, and a polypropylene short fiber in the shape of a ball, wherein the filler contains a photothermal material.

2. The ball-shaped photothermal filler of claim 1, wherein the one or more short fibers selected from the polyamide short fiber, polyester short fiber, and polypropylene short fiber has/have a fineness of 0.5 to 10 denier.

3. The ball-shaped photothermal filler of claim 1, wherein the one or more short fibers selected from the polyamide short fiber, polyester short fiber, and polypropylene short fiber has/have a fiber length of 0.5 to 100 mm.

4. The ball-shaped photothermal filler of claim 1, wherein the one or more short fibers selected from the polyamide short fiber, polyester short fiber, and polypropylene short fiber is/are a hollow fiber.

5. The ball-shaped photothermal filler of claim 4, wherein the one or more short fibers selected from the polyamide short fiber, polyester short fiber, and polypropylene short fiber has/have a hollowness of 10% or more.

6. The ball-shaped photothermal filler of claim 1, wherein the one or more short fibers selected from the polyamide short fiber, polyester short fiber, and polypropylene short fiber is/are a conjugated fiber.

7. The ball-shaped photothermal filler of claim 1, further comprising an elastic fiber.

8. The ball-shaped photothermal filler of claim 1, wherein the photothermal material is any one or a mixture of at least two materials selected from a carbonaceous compound, ATO, ITO, and an oxide of metal in Group IV.

9. The ball-shaped photothermal filler of claim 1, wherein the photothermal material is contained in the one or more short fibers selected from the polyamide short fiber, polyester short fiber, and polypropylene short fiber.

10. The ball-shaped photothermal filler of claim 1, wherein the photothermal material is contained in the filler by a spraying method.

11. The ball-shaped photothermal filler of claim 1, wherein the photothermal material is contained in the filler by a dipping method.

12. The ball-shaped photothermal filler of claim 1, wherein the photothermal filler has a diameter of 0.1 to 5.0 cm.

13. The ball-shaped photothermal filler of claim 1, wherein the photothermal filler has a fill power of 200 or more.

14. The ball-shaped photothermal filler of claim 1, wherein the temperature of the photothermal filler rises as much as 10°C or more after infrared irradiation.

15. The ball-shaped photothermal filler of any one of claims 1 to 14, wherein the photothermal filler is mixed with goose down or duck down.
